# FASCICULE DE BREVET EUROPEEN

(11) **EP 2 186 722 B1**
(45) Date de publication et mention de la délivrance du brevet: **09.11.2011**
(21) Numéro de dépôt: 09176145.2
(22) Date de dépôt: 16.11.2009
(51) Int. Cl.: B63B 21/04, F16G 11/00

(54) **Dispositif d'ancrage d'un élément sur une paroi et structure équipée d'un tel dispositif**
Verankerungsvorrichtung eines Elements an einer Wand und Struktur ausgestattet mit einer solchen Vorrichtung
Device for anchoring an element on a wall and structure equiped with such a device

(30) Priorité: 17.11.2008 FR 0857794
(43) Date de publication de la demande: 19.05.2010
(73) Titulaire: Blew Stoub, 56100 Lorient (FR)
(72) Inventeur: Le Roux, Vincent, 56680 Plouhinec (FR)
(74) Mandataire: Hays, Bertrand

(56) Documents cités:
- WO-A1-03/031256
- DE-U1- 20 014 131
- US-B1- 6 241 440

## Description

La présente invention concerne un dispositif d'ancrage pour ancrer sur une paroi un élément, et une structure comprenant une paroi équipée d'un tel dispositif d'ancrage. La présente invention concerne en particulier un système d'ancrage dans le domaine du nautisme pour l'ancrage d'un élément, tel qu'un câble ou hauban du gréement dormant, ou une pièce d'accastillage du gréement courant, sur le pont ou un espar du bateau.

Un dispositif d'ancrage connu dans le domaine du nautisme, en particulier pour l'ancrage d'un élément sur un espar, tel qu'un hauban sur un mât ou une poulie sur une bôme, est classiquement constitué d'une cadène de type plaque munie d'un anneau d'ancrage, qui est vissée sur la paroi de l'espar. Ce dispositif d'ancrage nécessite de prévoir sur la paroi un renfort local au niveau duquel est assemblée la plaque avec son anneau. La face intérieure de la paroi étant difficile d'accès, ces renforts locaux doivent être prévus au moment de la réalisation de l'espar. Dans le cas d'espar en carbone, ces renforts sont constitués par une surépaisseur de matière, par exemple par adjonction d'une pièce en fibres de carbone imprégnées de résine, qui est cuite avec l'ensemble de l'espar.

Ces dispositifs d'ancrage sont longs et onéreux à mettre en place, et s'avèrent en outre lourds et protubérants.

Le document US 6 241 440 montre les caractéristiques du préambule de la revendication 1.

Le but de la présente invention est de proposer un dispositif d'ancrage visant à pallier les inconvénients précités, qui soit notamment facile à monter et à démonter.

A cet effet, la présente invention propose un dispositif d'ancrage pour ancrer un élément sur une paroi, tel qu'un câble ou hauban sur un pont ou espar de bateau, caractérisé en ce qu'il comprend
- une pièce ou douille femelle tubulaire comprenant une paroi cylindrique, définissant un passage intérieur cylindrique, munie d'une collerette destinée à venir s'appliquer contre une première face, ou face intérieure de la paroi, autour d'une ouverture de la paroi, et présentant intérieurement un taraudage,
- une pièce ou douille mâle tubulaire comprenant une paroi tubulaire, définissant un passage intérieur, munie à une première extrémité d'une collerette destinée à venir s'appliquer contre la deuxième face, ou face extérieure de la paroi, et présentant extérieurement un filetage, ladite pièce mâle étant apte à être vissée dans ladite pièce femelle,
- une broche d'ancrage, apte à reposer transversalement par ses extrémités sur le bord annulaire de la deuxième extrémité de la douille mâle, et dont la longueur est inférieure au diamètre interne de la pièce femelle,
- au moins un lien textile souple apte à être enroulé sur la broche d'ancrage reposant sur ledit bord annulaire pour l'ancrage dudit lien textile sur la pièce mâle et à s'étendre au-delà de la collerette de la pièce mâle pour présenter une partie extérieure destinée à permettre l'ancrage d'un élément.

Selon l'invention, le dispositif d'ancrage comprend une pièce femelle tubulaire placée d'un côté de la paroi au niveau d'une ouverture de la paroi, et une pièce mâle tubulaire sur laquelle un lien textile est ancré au moyen d'une broche, la pièce mâle équipée de la broche et du lien textile peut être vissée dans la pièce femelle de l'autre côté de la paroi.

Dans le cas d'une paroi dont l'accès d'un côté, dit intérieur, est difficile, telle qu'une paroi tubulaire, à section fermée, par exemple la paroi d'un mât ou d'une bôme, la pièce femelle est assemblée du côté intérieur au niveau de l'ouverture, par exemple collée, la pièce mâle équipée du lien peut alors être montée aisément de l'extérieur, sans avoir besoin d'un accès au côté intérieur. Dans le cas d'un mât, l'assemblage de la pièce femelle peut être effectué au moment de la réalisation de la paroi tubulaire du mât, ou de préférence après réalisation de la paroi, un renfort local de la paroi n'étant pas nécessairement obligatoire pour le montage du dispositif.

La pièce mâle, équipée de la broche d'ancrage retenant le lien textile, et assemblée sur la pièce femelle, peut être aisément démontée, pour l'installation de l'élément à ancrer sur la paroi, le contrôle de l'usure du lien, de la pièce femelle, de la pièce mâle et/ou de la broche, le remplacement du lien textile ou de l'élément ancré. Dans le cas d'un dispositif d'ancrage pour les haubans d'un mât, le dispositif d'ancrage présente une grande facilité de démontage, notamment pour la préparation du matage.

Le lien ainsi ancré sur la pièce mâle vissée sur la pièce femelle offre une liaison de type rotule entre la paroi et l'élément à fixer, le lien pouvant s'orienter suivant l'élément sous tension et permettant ainsi une bonne répartition des efforts.

Selon une particularité, la collerette de la pièce femelle est disposée à une première extrémité de ladite pièce femelle, le taraudage s'étendant depuis la deuxième extrémité sur au moins une partie de ladite pièce femelle, ladite pièce femelle étant destinée à être insérée dans l'ouverture de la paroi. Cette configuration facilite l'opération d'assemblage de la pièce femelle au niveau d'une ouverture de paroi, en particulier en cas d'accès difficile, offre un assemblage sûr et résistant de la pièce femelle sur la paroi (un collage pouvant être réalisé à la fois à l'interface de la collerette et de la paroi et à l'interface de la paroi de l'ouverture et de la paroi cylindrique de la pièce femelle), tout en garantissant un faible encombrement de la pièce femelle du côté intérieur.

Selon un mode de réalisation, en position vissée d'utilisation, la broche d'ancrage est au moins partiellement insérée dans la pièce femelle, cette dernière assurant le centrage de ladite broche d'ancrage. La broche d'ancrage présente de préférence des parois latérales convexes, avec un rayon de courbure légèrement inférieur à celui du passage interne de la douille femelle.

Selon un mode de réalisation, la broche d'ancrage est formée d'une barre cylindrique munie d'un méplat par lequel ladite broche d'ancrage est apte à venir en appui contre le bord annulaire de la pièce mâle, et présente avantageusement une réduction d'épaisseur formant deux pattes latérales, à l'opposé du méplat, entre lesquelles passe le lien.

Selon un mode de réalisation, la pièce mâle a un passage interne de section transversale circulaire, et présente avantageusement un tronçon extérieur évasé, de sorte que le lien puisse s'orienter facilement selon l'élément sous tension, et notamment suivre les contraints du gréement, tout en limitant les risques de détérioration du lien par frottement contre la douille mâle.

Avantageusement, le lien textile est de préférence formé d'un cordage ou estrope de section transversale sensiblement circulaire, la partie extérieure se présente avantageusement sous la forme d'au moins une boucle d'ancrage. Le cordage est de préférence un cordage réalisé à partir de fibres synthétiques, en particulier par enroulement filamentaire.

Selon un mode de réalisation, ledit cordage a la forme d'une boucle et, soit la broche d'accrochage en appui sur le bord annulaire passe dans ladite boucle de sorte que la partie extérieure de la boucle constitue une boucle d'ancrage, soit la boucle passe sur la broche d'ancrage en appui sur le bord annulaire de sorte que la partie extérieure de la boucle constitue deux boucles d'ancrage.

Dans un autre mode de réalisation, le cordage présente à chaque extrémité une boucle, la broche d'ancrage en appui sur le bord annulaire passant dans lesdites boucles, de sorte que la partie extérieure du cordage constitue une boucle d'ancrage.

Le dispositif d'ancrage peut comprendre en outre un bouchon apte à être monté sur la pièce femelle pour obturer son passage interne, du côté opposé à la pièce mâle.

Selon un mode de réalisation, le dispositif d'ancrage comprend en outre un système de cale, formé par exemple d'un jeu de rondelles, apte à être intercalé entre la broche et le bord annulaire de la douille mâle, afin de pouvoir jouer sur la position de la broche d'ancrage et ainsi faire rentrer plus ou moins le lien textile et ajuster la tension de l'élément, en particulier du câble, relié à cette boucle.

La présente invention a également pour objet une structure comprenant une paroi rigide, **caractérisée en ce que** ladite paroi présente au moins une ouverture dans laquelle est monté un dispositif d'ancrage tel que défini précédemment, pour l'ancrage sur la paroi d'un élément. Le dispositif d'ancrage selon l'invention est particulièrement adapté pour les parois peu accessibles d'un côté. Selon un mode de réalisation, ladite paroi de la structure est tubulaire, de section transversale fermée, la douille femelle est montée, du côté intérieur de ladite paroi, contre la face intérieure de ladite paroi, et est de préférence assemblée sur la paroi, par exemple par collage. Selon un mode de réalisation, ladite structure est un espar d'un bateau, tel que le mât ou la bôme d'un voilier.

L'invention sera mieux comprise, et d'autres buts, détails, caractéristiques et avantages apparaîtront plus clairement au cours de la description explicative détaillée qui va suivre de modes de réalisation particuliers actuellement préférés de l'invention, en référence aux dessins schématiques annexés, sur lesquels :
- les figures 1 et 2 sont deux vues schématiques en perspective à l'état éclaté des différentes pièces constitutives d'un dispositif d'ancrage selon un premier mode de réalisation de l'invention ;
- les figures 3 et 4 sont des vues en coupe longitudinale du dispositif d'ancrage des figures 1 et 2, assemblé sur une paroi d'une structure, respectivement selon un premier plan de coupe passant par l'axe longitudinal de la broche d'accroche et un second plan de coupe perpendiculaire au premier plan de coupe ;
- les figures 5 et 6 sont respectivement une vue schématique en perspective et une vue schématique de côté, à l'état éclaté, d'un dispositif d'ancrage selon un second mode de réalisation ;
- les figures 7 et 8 sont des vues schématiques en coupe longitudinale, analogues aux figures 3 et 4, du dispositif d'ancrage des figures 5 et 6 ;
- les figures 9 et 10 sont deux vues schématiques en coupe longitudinale analogues aux figures 3 et 4, d'un dispositif d'ancrage selon un troisième mode de réalisation ; et,
- la figure 11 est une vue schématique du lien du dispositif des figures 9 et 10.

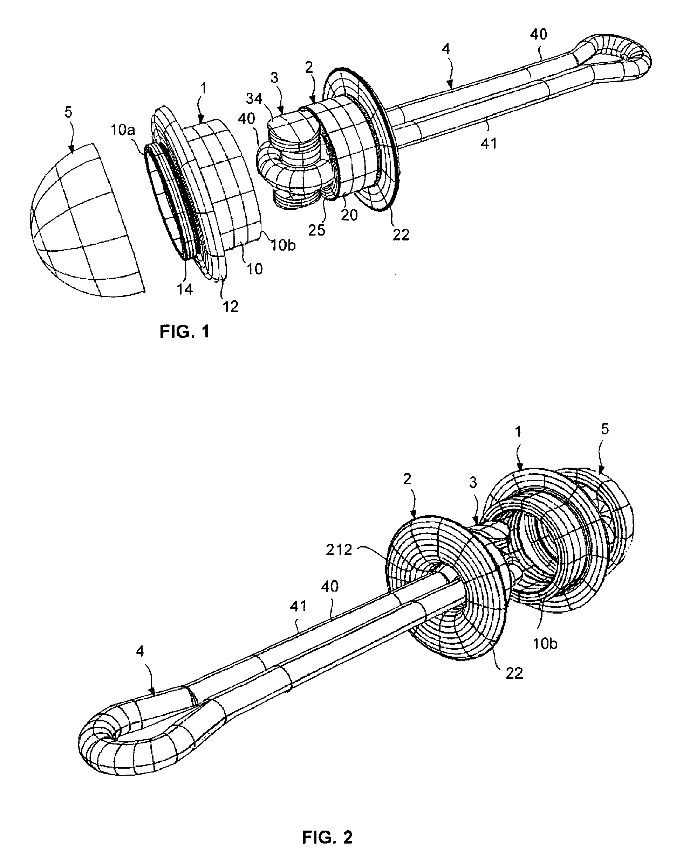

Les figures 1 à 4 illustrent un dispositif d'ancrage selon un premier mode de réalisation de l'invention, destiné à être monté sur la paroi tubulaire d'une structure de type espar, en particulier d'un mât, pour l'ancrage d'un câble. Le dispositif d'accrochage peut bien entendu être utilisé sur tout type de paroi, dans le domaine du nautisme ou dans d'autres domaines, pour l'ancrage de tout type d'élément, en particulier d'éléments destinés à être mis sous tension.

Le dispositif d'ancrage comprend une pièce ou douille femelle tubulaire intérieure, dite douille femelle 1, destinée à être placée du coté intérieur de la paroi, une pièce ou douille mâle tubulaire extérieure, dite douille mâle 2, un pion ou broche d'ancrage 3, un lien textile 4, et un bouchon 5.

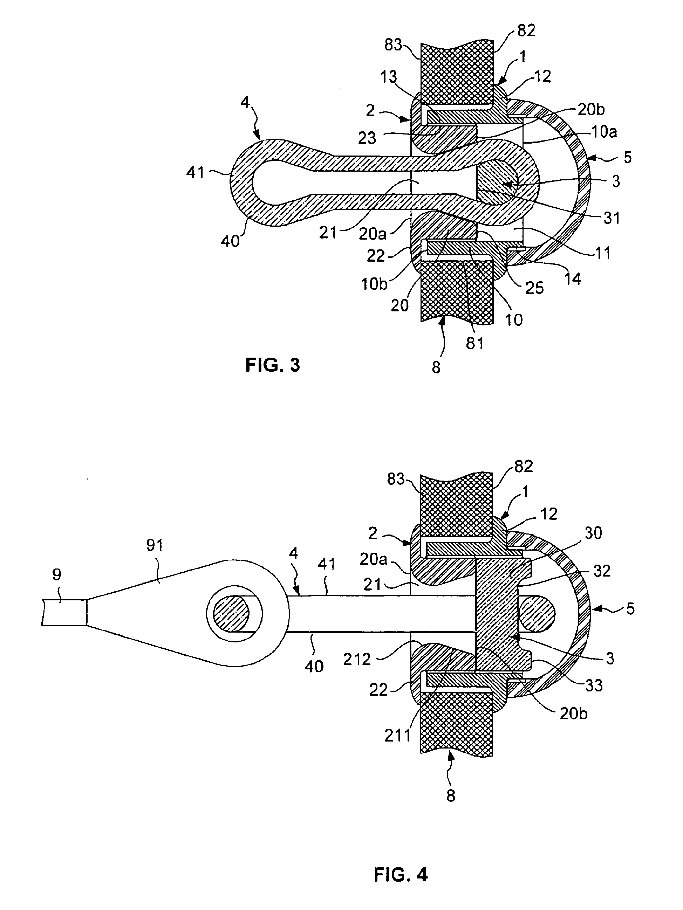

La douille femelle 1 comprend une paroi cylindrique 10, définissant un passage intérieur cylindrique 11, présentant à proximité d'une première extrémité 10a un épanouissement formant une collerette 12 annulaire. La paroi cylindrique est munie intérieurement d'un taraudage 13 (Fig. 3) s'étendant depuis sa deuxième extrémité 10b opposée à la collerette. Ce taraudage peut s'étendre jusqu'à la première extrémité 10a, ou s'interrompre avant, par exemple avant la collerette. La collerette est avantageusement légèrement décalée par rapport à la première extrémité de manière à former une bague annulaire 14 pour l'assemblage du bouchon.

La douille mâle 2 comprend une paroi tubulaire 20, définissant un passage intérieur 21, présentant à une première extrémité 20a un épanouissement formant une collerette 22 annulaire. La paroi tubulaire présente une face extérieure cylindrique et est munie extérieurement d'un filetage 23 (Fig. 3) s'étendant depuis sa deuxième extrémité 20b opposée à la collerette, éventuellement jusqu'à ladite collerette, la douille mâle étant apte à se visser dans le taraudage de la douille femelle. En référence à la figure 4, la face intérieure de la paroi tubulaire a une section transversale circulaire non constante, le passage intérieur 21 présentant, de la deuxième extrémité 20b à la première extrémité 20a, un premier tronçon tronconique 211 dont la section transversale diminue progressivement depuis ladite deuxième extrémité, qui se prolonge par un deuxième tronçon évasé 212, dont la section transversale augmente suivant un rayon de courbure sensiblement constant pour former une surface arrondie.

La broche 3 d'ancrage est formée d'une barre cylindrique 30 dont la longueur est supérieure au diamètre interne de la douille mâle 2 au niveau de sa deuxième extrémité 20b, et inférieure au diamètre interne de la douille femelle 1. Cette longueur est par exemple légèrement inférieure au diamètre extérieur de la paroi tubulaire de la douille mâle. Le barreau présente un méplat 31, sur toute sa longueur, par lequel le barreau est destiné à venir en appui contre le bord annulaire 25 de la deuxième extrémité de la douille mâle. L'épaisseur de la paroi de la douille mâle à cette deuxième extrémité 20b, soit la largeur de ce bord annulaire 25, est définie pour offrir une surface d'appui suffisante pour la broche afin d'assurer un bon report des efforts de traction.

La broche d'ancrage présente une réduction d'épaisseur au centre formant une portion centrale 32 cylindrique et deux portions latérales 33 cylindriques de diamètre supérieure deux portions latérales, les trois portions étant disposées tangentiellement, le méplat 31 précité étant formé au niveau de la tangente auxdites portions. Les deux portions forment deux pattes latérales, opposées au méplat, entre lesquelles vient se caler le lien 4. La broche présente deux parois latérales 34 (Fig. 1) opposées convexes, permettant un meilleur calage de la broche par la face interne de la douille femelle. Le rayon de courbure de ces parois latérales est légèrement inférieur au diamètre extérieur de la douille mâle.

La douille femelle, la douille mâle et la broche d'ancrage sont chacune formée d'une pièce monobloc rigide, de préférence métallique, par exemple en titane.

Le bouchon 5, par exemple en matériau plastique, comprend une paroi sensiblement semi-sphérique apte à venir s'assembler sur la bague par emmanchement, et de préférence par encliquetage. Le bouchon présente à proximité de son ouverture des moyens d'encliquetage, aptes à coopérer avec des moyens d'encliquetage complémentaires prévus sur la bague. Le bouchon comprend par exemple une gorge annulaire intérieure dans laquelle vient se positionner une nervure annulaire extérieure de la bague. En variante, le bouchon est assemblé par vissage, et comprend par exemple un taraudage intérieur venant se visser sur un filetage extérieur de la bague 14.

Le dispositif comprend en outre un lien textile 4 qui, dans ce mode de réalisation, est formé d'un cordage 40 ayant la forme d'une boucle. Le cordage en boucle est en fibres synthétiques, et est par exemple réalisé à partir d'un cordage vendu sous la dénomination commerciale Dyneema.

Les figures 3 et 4 illustrent le dispositif d'ancrage monté sur une paroi 8, les douilles assemblées l'une à l'autre de part et d'autre d'une ouverture 81 ménagée dans la paroi.

Dans le cas particulier de la paroi tubulaire d'un mât, la douille femelle 1 est introduite par l'intérieur du mât dans l'ouverture 81, de sorte que sa collerette 12 vient en appui contre la face interne 82 de la paroi, sa paroi tubulaire positionnée dans l'ouverture. De préférence, la douille femelle est assemblée par collage. En cas d'accès difficile, notamment lorsque l'ouverture est éloignée de l'une des extrémités ouvertes du mât, la douille femelle peut être rapportée à l'aide d'un petit cordage, selon des techniques connes.

Le cordage en boucle est inséré dans le passage interne 21 de la douille mâle de sorte que la broche d'ancrage puisse être insérée dans la boucle, du côté de la deuxième extrémité 20b. Le cordage ainsi monté présente deux brins passant dans le passage interne de la douille mâle, reliés par une première partie d'extrémité coudée qui est enroulée sur la broche. Les deux brins qui s'étendent au-delà de la douille mâle et qui sont reliés par une deuxième partie d'extrémité coudée, forment une boucle d'ancrage 41 pour l'ancrage d'un élément. Le diamètre de la portion centrale 32 de la broche est défini en fonction du diamètre d'enroulement maximum du cordage.

La douille mâle sur laquelle est monté le lien avec la broche en appui sur le bord annulaire, est vissée dans la douille femelle jusqu'à appliquer la collerette 22 contre la face extérieure 83 de la paroi. Le vissage est réalisé du côté extérieur du mât, par la douille mâle, sans avoir besoin d'un accès au côté intérieur. La douille mâle peut comprendre au niveau de sa collerette des moyens de prise, tel que des trous ou des méplats latéraux, pour le serrage de la douille mâle au moyen d'une clé appropriée.

En position serrée sur la paroi, la broche est calée entre la paroi tubulaire de la douille femelle. Pour protéger le cordage et la broche, le bouchon est éventuellement placé sur la douille femelle pour recouvrir la broche et le cordage.

La boucle d'ancrage peut être utilisée pour la fixation d'un câble, tel qu'un hauban, au moyen d'une manille, ou par passage direct du lien dans l'anneau d'extrémité 91 d'un câble 9, tel qu'illustré schématiquement sur la figure 4. Dans ce dernier cas, un cordage est par exemple passé par l'une de ses extrémités libres dans l'anneau d'extrémité 91 du câble, les extrémités du cordage sont ensuite reliées, par réalisation d'une épissure, pour former une boucle, la boucle étant ensuite ancrée sur la douille mâle avec la broche, tel que décrit précédemment. En variante, un cordage est passé sur la douille mâle, l'un des deux brins libres est passé dans l'anneau d'extrémité 91 du câble, et une épissure est réalisée sur place pour former la boucle d'ancrage.

Ce dispositif d'ancrage présente de nombreux avantages, notamment : une réduction de poids, le dispositif ne nécessitant généralement pas des renforts locaux, la pièce mâle, la pièce femelle et/ou la broche étant avantageusement réalisées en titane ; une amélioration de la trainée aérodynamique, la pièce mâle étant peu saillante ; une simplicité de mise en place, l'installation nécessitant un simple perçage de la paroi et de préférence un collage de la pièce femelle ; et une facilité de démontage.

Dans le cas de parois courbes, des semelles peuvent être prévues afin que, localement, les surfaces extérieures et intérieures de la paroi soient sensiblement planes et parallèles.

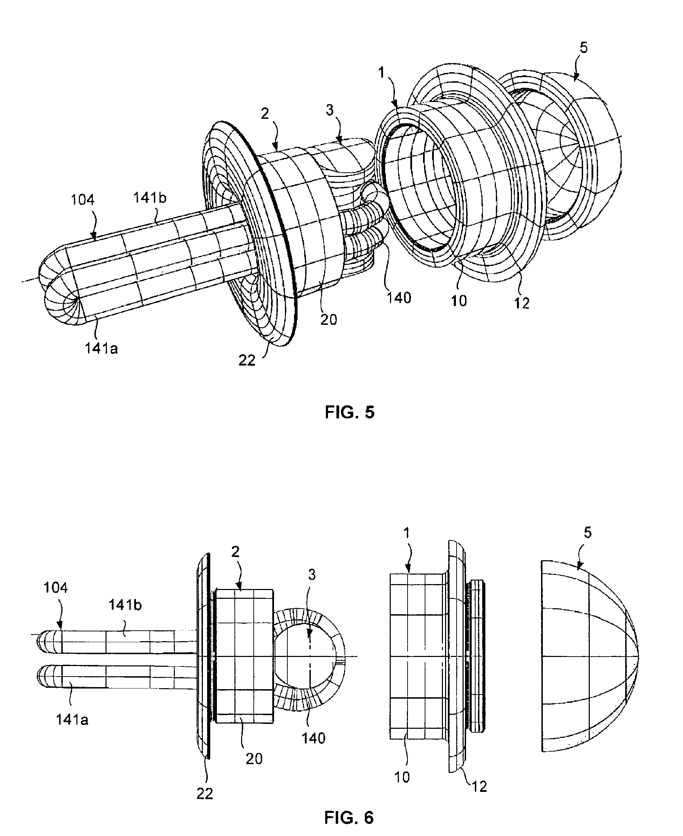

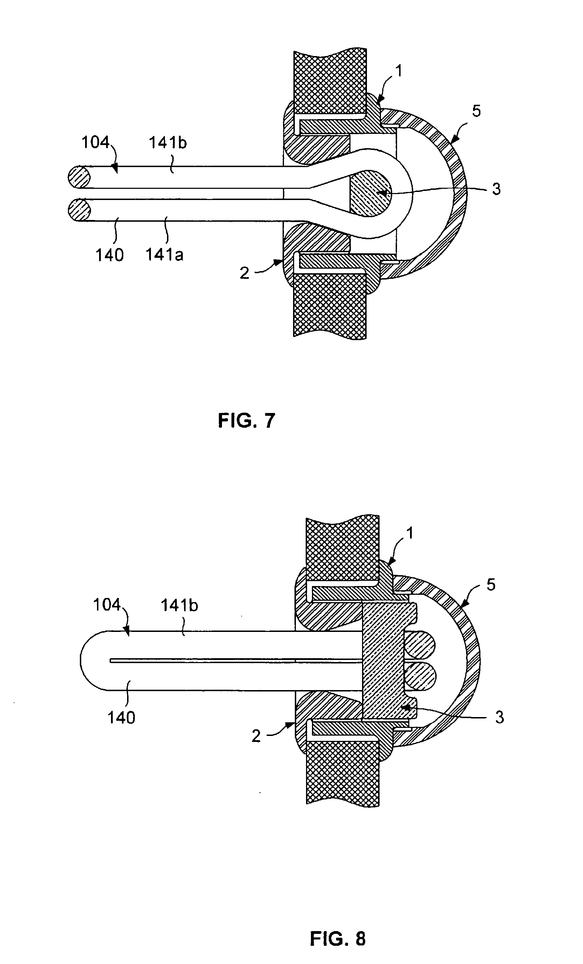

Les figures 5 à 8 illustrent un dispositif d'ancrage selon un deuxième mode de réalisation, les éléments de ce dispositif d'ancrage qui sont identiques à ceux du premier mode de réalisation portant les mêmes références. Ce dispositif d'ancrage se différencie du précédent uniquement par son lien 104. Les douilles, la broche et le bouchon sont identiques. Dans ce mode de réalisation, le lien est constitué également d'un cordage 140 en forme de boucle. La boucle, pliée en deux, est enroulée sur la broche d'ancrage 5, et présente quatre brins s'étendant dans la douille mâle, reliés à l'extérieur deux à deux pour former deux boucles d'ancrage 141a, 141b.

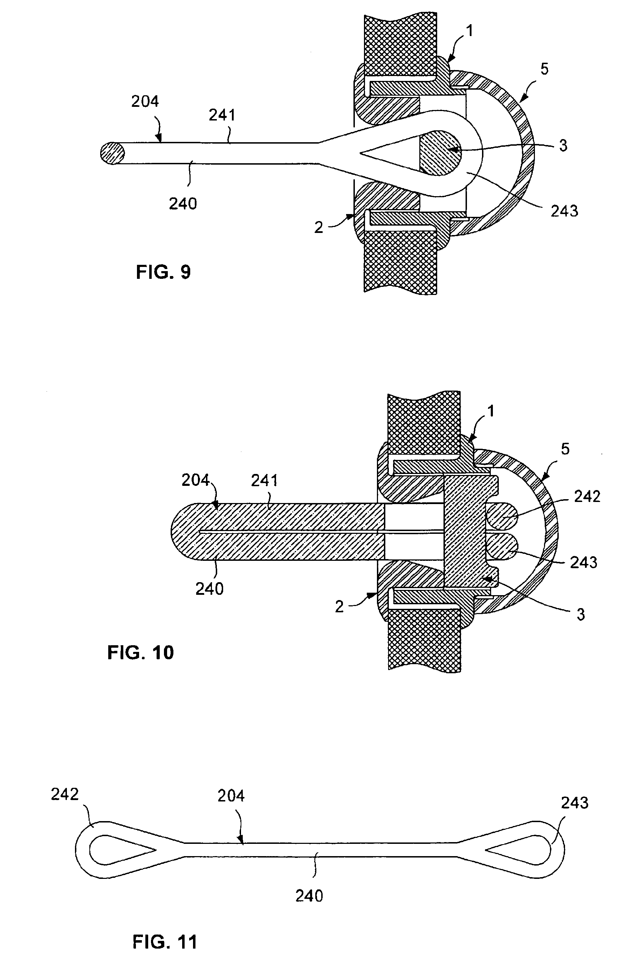

Les figures 9 à 11 illustrent un dispositif d'ancrage selon un troisième mode de réalisation, les éléments de ce dispositif identiques aux deux premiers modes de réalisation portant les mêmes références. Ce dispositif d'ancrage se différencie également par son lien textile 204 formé d'un cordage 240 dont les extrémités sont conformées en boucles 242, 243, lesdites boucles étant réalisées par des épissures. La broche d'ancrage 5 est insérée dans les deux boucles 242, 243 de manière à former à l'extérieur de la douille mâle une boucle d'ancrage 241 pour l'ancrage d'un élément. Ce type de lien est particulièrement avantageux car il permet de monter et démonter aisément de la paroi un câble avec anneau d'extrémité, sans utiliser de manille, et sans réaliser d'épissure sur place, et il permet également de changer le lien sans réaliser d'épissure sur place.

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif d'ancrage pour ancrer un élément (9) sur une paroi (8) tel qu'un câble ou hauban sur un pont ou espar de bateau, comprenant
- une pièce femelle (1) tubulaire comprenant une paroi cylindrique (10), définissant un passage intérieur cylindrique (11), munie d'une collerette (12) destinée à venir s'appliquer contre une première face (82) de la paroi (8), autour d'une ouverture (81) de la paroi, et présentant intérieurement un taraudage (13),
- une pièce mâle (2) tubulaire comprenant une paroi tubulaire (20), définissant un passage intérieur (21), munie à une première extrémité (20a) d'une collerette (22) destinée à venir s'appliquer contre la deuxième face (83) de la paroi, et présentant extérieurement un filetage (23), ladite pièce mâle étant apte à être vissée dans ladite pièce femelle,
- une broche d'ancrage (3), apte à reposer transversalement sur le bord annulaire (25) de la deuxième extrémité (20b) de la pièce mâle, et
- au moins un lien textile (4, 104, 204) souple apte à être enroulé sur la broche d'ancrage reposant sur ledit bord annulaire et à s'étendre au-delà de la collerette (22) de la pièce mâle (2) pour présenter une partie extérieure (41, 141a, 141b, 241) destinée à permettre l'ancrage d'un élément,
**caractérisé en ce que** la longueur de la broche d'ancrage (3) est inférieure au diamètre interne de la pièce femelle (1), de sorte que la pièce mâle (2) équipée de la broche d'ancrage (3) et du lien textile (4, 104, 204) est apte à être assemblée sur la pièce femelle en vissant ladite pièce mâle dans ladite pièce femelle.

2. Dispositif d'ancrage selon la revendication 1, **caractérisé en ce que** ladite pièce mâle (2) est formée d'une pièce monobloc rigide.

3. Dispositif d'ancrage selon la revendication 1 ou 2, **caractérisé en ce que** la collerette (12) de la pièce femelle (1) est disposée à une première extrémité (10a) de ladite pièce femelle, le taraudage (13) s'étendant depuis la deuxième extrémité (10b) sur au moins une partie de ladite pièce femelle, ladite pièce femelle étant destinée à être insérée dans l'ouverture (81) de la paroi (8).

4. Dispositif d'ancrage selon l'une des revendications 1 à 3 **caractérisé en ce qu'**en position vissée d'utilisation, la broche d'ancrage (3) est au moins partiellement insérée dans la pièce femelle (1), cette dernière assurant le centrage de ladite broche d'ancrage.

5. Dispositif d'ancrage selon l'une des revendications 1 à 4, **caractérisé en ce que** la broche d'ancrage (5) présente des parois latérales (34) convexes.

6. Dispositif d'ancrage selon l'une des revendications 1 à 5, **caractérisé en ce que** la broche d'ancrage (3) est formée d'une barre cylindrique (30) munie d'un méplat (31) par lequel ladite broche d'ancrage est apte à venir en appui contre le bord annulaire (25) de la pièce mâle (2).

7. Dispositif d'ancrage selon l'une des revendications 1 à 6, **caractérisé en ce que** la pièce mâle (2) a un passage interne (21) de section transversale circulaire.

8. Dispositif d'ancrage selon l'une des revendications 1 à 7, **caractérisé en ce que** le lien textile (4, 104, 204) est formé d'un cordage de section transversale sensiblement circulaire, la partie extérieure se présente avantageusement sous la forme d'au moins une boucle d'ancrage (41, 141, 241).

9. Dispositif d'ancrage selon la revendication 8, **caractérisé en ce que** ledit cordage a la forme d'une boucle (4, 104),
la broche d'ancrage (3) en appui sur le bord annulaire (25) passe dans ladite boucle (4) de sorte que la partie extérieure de la boucle constitue une boucle d'ancrage (41),
ou la boucle (104) passe sur la broche d'ancrage en appui sur le bord annulaire de sorte que la partie extérieure de la boucle constitue deux boucles d'ancrage (141a, 141b).

10. Dispositif d'ancrage selon la revendication 8, **caractérisé en ce que** le cordage (204) présente à chaque extrémité une boucle (242, 243), la broche d'ancrage (3) en appui sur le bord annulaire (25) passant dans lesdites boucles de sorte que la partie extérieure du cordage (204) constitue une boucle d'ancrage.

11. Structure comprenant une paroi (8) rigide, **caractérisée en ce que** ladite paroi présente au moins une ouverture (81) dans laquelle est monté un dispositif d'ancrage selon l'une des revendications 1 à 10.

12. Structure selon la revendication 11, **caractérisée en ce que** ladite paroi (8) est tubulaire, la pièce femelle (1) est montée contre la face intérieure (82) de ladite paroi, et est assemblée sur ladite paroi.

13. Structure selon la revendication 11 ou 12, **caractérisée en ce que** ladite structure est un espar d'un bateau, tel que le mât ou la bôme d'un voilier.

## Claims

1. Anchoring device for anchoring an element (9) to a wall (8), such as for anchoring a cable or stay to a deck or spar of a boat, and comprising:
- a tubular female component (1) comprising a cylindrical wall (10) that defines a cylindrical interior passage (11) and is equipped with a flange (12) intended to press against a first face (82) of the wall (8), around an opening (81) in the wall, and having an internal tapped thread (13),
- a tubular male component (2) comprising a tubular wall (20) that defines an interior passage (21) and is equipped at a first end (20a) with a flange (22) intended to press against the second face (83) of the wall, and having an external screw thread (23), the said male component being able to be screwed into the said female component.
- an anchor pin (3), able to rest transversely against the annular edge (25) of the second end (20b) of the male component, and
- at least one flexible textile tie (4, 104, 204) that can be wound onto the anchor pin resting against the said annular edge and can extend beyond the flange (22) of the male component (2) to exhibit an external part (41, 141a, 141b, 241) intended to allow an element to be anchored,
**characterized in that** the length of the anchor pin (3) is smaller than the inside diameter of the female component (1), so that the male component (2) equipped with the anchor pin (3) and with the textile tie (4, 104, 204) is able to be assembled with the female component by screwing the said male component into the said female component.

2. Anchoring device according to Claim 1, **characterized in that** the said male component (2) is formed as a rigid one-piece element.

3. Anchoring device according to Claim 1 or 2, **characterized in that** the flange (12) of the female component (1) is located at a first end (10a) of the said female component, the tapped thread (13) extending from the second end (10b) over at least part of the said female component, the said female component being intended to be inserted into the opening (81) in the wall (8).

4. Anchoring device according to one of Claims 1 to 3, **characterized in that**, in the screwed-together position of use, the anchor pin (3) is at least partially inserted inside the female component (1), the latter centring the said anchor pin.

5. Anchoring device according to one of Claims 1 to 4, **characterized in that** the anchor pin (5) has convex side walls (34).

6. Anchoring device according to one of Claims 1 to 5, **characterized in that** the anchor pin (3) is formed of a cylindrical bar (30) equipped with a flat (31) via which the said anchor pin is able to rest against the annular edge (25) of the male component (2).

7. Anchoring device according to one of Claims 1 to 6, **characterized in that** the male component (2) has an internal passage (21) of circular cross section.

8. Anchoring device according to one of Claims 1 to 7, **characterized in that** the textile tie (4, 104, 204) is formed of a rope of substantially circular cross section, the exterior part advantageously being in the form of at least one anchoring loop (41, 141, 241).

9. Anchoring device according to Claim 8, **characterized in that** the said rope is in the form of a loop (4, 104),
the anchor pin (3) pressing against the annular edge (25) passes through the said loop (4) so that the exterior part of the loop constitutes an anchoring loop (41),
or the loop (104) passes over the anchor pin pressing against the annular edge so that the exterior part of the loop constitutes two anchoring loops (141a, 141b).

10. Anchoring device according to Claim 8, **characterized in that** the rope (204) has a loop (242, 243) at each end, the anchor pin (3) pressing against the annular edge (25) passing through the said loops so that the exterior part of the rope (204) constitutes an anchoring loop.

11. Structure comprising a rigid wall (8), **characterized in that** the said wall has at least one opening (81) in which an anchoring device according to one of Claims 1 to 10 is mounted.

12. Structure according to Claim 11, **characterized in that** the said wall (8) is tubular, the female component (1) is mounted against the interior face (82) of the said wall and is assembled with the said wall.

13. Structure according to Claim 11 or 12, **characterized in that** the said structure is a spar of a boat, such as the mast or the boom of a sailing boat.

## Patentansprüche

1. Verankerungsvorrichtung zum Verankern eines Elements (9) an einer Wand (8), wie etwa ein Seil oder Tau an einem Boots- bzw. Schiffsdeck oder einer Spiere, enthaltend:
- ein rohrförmiges Aufnahmeteil (1) mit einer zylindrischen Wand (10), das einen zylindrischen Innendurchgang (11) definiert, mit einem Kragen (12) versehen ist, der dazu bestimmt ist, sich an eine erste Seite (82) der Wand (8) um eine Wandöffnung (81) herum anzulegen, und innen ein Innengewinde (13) aufweist,
- ein rohrförmiges Einsteckteil (2) mit einer rohrförmigen Wand (20), das einen Innendurchgang (21) definiert, an einem ersten Ende (20a) mit einem Kragen (22) versehen ist, der dazu bestimmt ist, sich an eine zweite Seite (83) der Wand anzulegen, und außen ein Außengewinde (23) aufweist, wobei das Einsteckteil dazu geeignet ist, in das Aufnahmeteil eingeschraubt zu werden,
- einen Verankerungszapfen (3), der dazu geeignet ist, quer am ringförmigen Rand (25) des zweiten Endes (20b) des Einsteckteils aufzuliegen, und
- zumindest ein nachgiebiges textiles Verbindungsstück (4, 104, 204), das dazu geeignet ist, auf den am ringförmigen Rand aufliegenden Verankerungszapfen aufgewickelt zu werden und sich über den Kragen (22) des Einsteckteils (2) hinaus zu erstrecken, um einen Außenabschnitt (41, 141a, 141 b, 241) aufzuweisen, der dazu bestimmt ist, das Verankern eines Elements zu gestatten,
**dadurch gekennzeichnet, dass** die Länge des Verankerungszapfens (3) kleiner als der Innendurchmesser des Aufnahmeteils (1) ist, so dass das mit dem Verankerungszapfen (3) und dem textilen Verbindungsstück (4, 104, 204) ausgestattete Einsteckteil (2) dazu geeignet ist, an das Aufnahmeteil montiert zu werden, indem das Einsteckteil in das Aufnahmeteil eingeschraubt wird.

2. Verankerungsvorrichtung nach Anspruch 1, **dadurch gekennzeichnet, dass** das Einsteckteil (2) aus einem starren einstückigen Teil gebildet ist.

3. Verankerungsvorrichtung nach Anspruch 1 oder 2, **dadurch gekennzeichnet, dass** der Kragen (12) des Aufnahmeteils (1) an einem ersten Ende (10a) des Aufnahmeteils angeordnet ist, wobei das Innengewinde (13) sich von dem zweiten Ende (10b) über zumindest einen Abschnitt des Aufnahmeteils erstreckt, wobei das Aufnahmeteil dazu bestimmt ist, in die Öffnung (81) der Wand (8) eingeführt zu werden.

4. Verankerungsvorrichtung nach einem der Ansprüche 1 bis 3, **dadurch gekennzeichnet, dass** in eingeschraubter Gebrauchsstellung der Verankerungszapfen (3) zumindest teilweise in das Aufnahmeteil (1) eingeführt ist, wobei letzteres die Zentrierung des Verankerungszapfens gewährleitstet.

5. Verankerungsvorrichtung nach einem der Ansprüche 1 bis 4, **dadurch gekennzeichnet, dass** der Verankerungszapfen (5) konvex verlaufende Seitenwände (34) aufweist.

6. Verankerungsvorrichtung nach einem der Ansprüche 1 bis 5, **dadurch gekennzeichnet, dass** der Verankerungszapfen (3) aus einem zylindrischen Stab (30) gebildet ist, der mit einer Abflachung (31) versehen ist, mit welcher der Verankerungszapfen geeignet ist, in Anlage an den ringförmigen Rand (25) der Einsteckteils (2) zu gelangen.

7. Verankerungsvorrichtung nach einem der Ansprüche 1 bis 6, **dadurch gekennzeichnet, dass** das Einsteckteil (2) einen Innendurchgang (21) mit kreisrundem Querschnitt hat.

8. Verankerungsvorrichtung nach einem der Ansprüche 1 bis 7, **dadurch gekennzeichnet, dass** das textile Verbindungsstück (4, 104, 204) aus einem Tauwerk mit im wesentlichen kreisrundem Querschnitt gebildet ist, wobei der äußere Abschnitt vorteilhaft in Form zumindest einer Verankerungsschlinge (41, 141, 241) vorliegt.

9. Verankerungsvorrichtung nach Anspruch 8, **dadurch gekennzeichnet, dass** das Tauwerk die Form einer Schlinge (4, 104) aufweist,
der Verankerungszapfen (3) in Anlage an dem ringförmigen Rand (25) in die Schlinge (4) tritt, so dass der äußere Abschnitt der Schlinge eine Verankerungsschlinge (41) bildet,
oder die Schlinge (104) auf den Verankerungszapfen in Anlage an dem ringförmigen Rand tritt, so dass der äußere Abschnitt der Schlinge zwei Verankerungsschlingen (141a, 141b) bildet.

10. Verankerungsvorrichtung nach Anspruch 8, **dadurch gekennzeichnet, dass** das Tauwerk (204) an jedem Ende eine Schlinge (242, 243) aufweist, wobei der Verankerungszapfen (3) in Anlage an dem ringförmigen Rand (25) in die Schlingen tritt, so dass der äußere Abschnitt des Tauwerks (204) eine Verankerungsschlinge bildet.

11. Aufbau mit einer starren Wand (8), **dadurch gekennzeichnet, dass** die Wand zumindest eine Öffnung (81) aufweist, in welche eine Verankerungsvorrichtung nach einem der Ansprüche 1 bis 10 montiert ist.

12. Aufbau nach Anspruch 11, **dadurch gekennzeichnet, dass** die Wand (8) rohrförmig ist, wobei das Aufnahmeteil (1) an die Innenseite (82) der Wand angefügt und an die Wand angebracht ist.

13. Aufbau nach Anspruch 11 oder 12, **dadurch gekennzeichnet, dass** der Aufbau eine Spiere von einem Boot ist, wie etwa der Mast bzw. Baum eines Segelschiffes.
